# EUROPÄISCHE PATENTSCHRIFT

(11) **EP 0 859 735 B1**
(45) Veröffentlichungstag und Bekanntmachung des Hinweises auf die Patenterteilung: **12.05.1999**
(21) Anmeldenummer: 96938107.8
(22) Anmeldetag: 06.11.1996
(51) Int. Cl.: B66B 29/00, G01V 8/20

(54) **WIEDERBEREITSCHAFTSSCHALTEINRICHTUNG FÜR PERSONENFÖRDERANLAGEN**
SWITCHING ARRANGEMENT FOR RETURNING A PEOPLE-CONVEYING DEVICE TO A STATE OF READINESS
SYSTEME DE COMMUTATION DE REMISE EN SERVICE POUR DISPOSITIFS DE TRANSPORT DE PERSONNES

(30) Priorität: 07.11.1995 DE 19541410
(43) Veröffentlichungstag der Anmeldung: 26.08.1998
(73) Patentinhaber: O & K Rolltreppen GmbH & Co KG, 45525 Hattingen/Ruhr (DE)
(72) Erfinder: BÜSCHER, Hans-Werner, D-59425 Unna (DE); MALETZKI, Christian, D-45731 Waltrop (DE); LANGE, Dirk, D-44229 Dortmund (DE); TAUTZ, Andreas, D-45731 Waltrop (DE)
(74) Vertreter: Zipse & Habersack
(86) Internationale Anmeldenummer: EP9604839
(87) Internationale Veröffentlichungsnummer: WO9717278

(56) Entgegenhaltungen:
- DE-A- 2 911 658
- DE-A- 2 941 119
- DE-B- 1 271 601

## Beschreibung

Die Erfindung betrifft eine Wiederbereitschaftsschalteinrichtung für Personenförderanlagen, insbesondere für eine Rolltreppe oder einen Rollsteig, die bzw. der mit einer Vielzahl von aus nahe des Treppen- bzw. Paletten bandes im Sockelbereich angeordneten Sendern und Empfängern bestehenden Lichtschranken ausgerüstet ist, deren Signale mindestens einer Auswerteelektronik zugeführt werden, die die Personenförderanlage nach Betätigen der Nothalttaste selbsttätig wieder in den Zustand der Einsatzbereitschaft versetzt.

Der DE-C 29 41 119 ist ein Verfahren zur Personensicherung im Fahrbereich von Beförderungsanlagen, insbesondere Rolltreppen, zu entnehmen, bei deren Einschalten durch Überwachung mit einer Lichtschrankenanordnung und durch entsprechende Ansteuerung einer Einschaltsperreinrichtung, wobei in der Lichtschrankenanordnung mittels einer Reflektoranordnung Licht aus mindestens einem Sender zu mindestens einem Empfänger geführt und auf einen vorbestimmten Mindestwert überprüft wird. Jedem Sender wird zur Bildung eines Überwachungsabschnittes ein Empfänger zugeordnet, wobei jeder Überwachungsabschnitt in Zusammenwirken mit der Reflektoranordnung in fächerartiger Überdeckung überwacht wird. Die Sperrung der Beförderungsanlage wird mittels der Einschaltsperreinrichtung dann aufgehoben, wenn die Pegel der Empfängersignale sämtlicher Überwachungsabschnitte über dem Mindestwert liegen und ihre Differentialquotienten gleich null sind. Die Beförderungsanlage soll nur dann eingeschaltet werden, wenn sich mit Sicherheit keine Person mehr im Förderbereich der Beförderungsanlage aufhält. Durch die vorstehend beschriebene Maßnahme wird der Förderbereich der Beförderungsanlage flächendeckend und somit praktisch lückenlos überwacht. Auf der Beförderungsanlage liegende oder stehende Personen werden daher sicher erfaßt. Darüber hinaus werden auch sich fortbewegende Personen erkannt, so daß die Anlage erst dann wieder in Betrieb genommen wird, wenn sich tatsächlich niemand mehr im Förderbereich aufhält. Eine Gefährdung von Personen ist daher trotz der automatischen Wiederinbetriebnahme mit Sicherheit ausgeschlossen.

Auch wenn hier bereits eine funktionale Sicherheitseinrichtung beschrieben ist, so ist infolge der zwangsläufig notwendigen Reflektoren, insbesondere im Hinblick auf Vandalismus, nicht ausgeschlossen, daß infolge der auftretenden Beschädigungen die Funktion der Sicherheitseinrichtung in Frage gestellt werden kann. Darüber hinaus erscheint der zu tätigende Aufwand im Hinblick auf die notwendige Verdrahtung der Lichtschranken untereinander bauaufwendig zu sein.

Ziel des Erfindungsgegenstandes ist es, eine Wiederbereitschaftsschalteinrichtung für Personenförderanlagen gemäß dem gattungsbildenden Teil des ersten Patentanspruchs dahingehend
weiterzubilden, daß bei möglichst einfachem Aufbau der Überwachungseinrichtung einerseits der Verdrahtungsaufwand und somit auch der Ansteuerungsaufwand minimiert werden kann und andererseits die Befestigung im Bereich der Sockelleiste dergestalt herbeiführbar ist, daß die Sender und Empfänger leicht austauschbar, gleichzeitig jedoch auch vor äußeren Einflüssen geschützt sind.

Dieses Ziel wird erfindungsgemäß dadurch erreicht, daß
- die einzelnen Sender und Empfänger zu einer Lichtschrankenkette zusammengefaßt sind,
- in vorgebbaren Abständen Sender und Empfänger einander in etwa gegenüberliegend angeordnet sind,
- auf jeder Seite der Personenförderanlage Sender und Empfänger bzw. Empfänger und Sender alternierend vorgesehen sind und
- die Verdrahtung der einzelnen Sender und Empfänger auf jeder Seite der Personenförderanlage ohne Verbindung mit den auf der benachbarten Seite vorgesehenen Empfänger und Sender durch Steckverbindungen hergestellt ist.

Vorteilhafte Weiterbildungen des Erfindungsgegenstandes sind den Unteransprüchen zu entnehmen.

Bei nur zwei Bautypen für Sender und Empfänger der Lichtschrankenkette wird eine einfache Verdrahtung durch kodierte Steckverbindungen an den Sendem und Empfängem hergestellt, wodurch sich kurze Kabelverbindungen zwischen den Bauteilen ergeben. Eine Verbindung von der rechten zur linken Seite der Rolltreppen bzw. Rollsteige ist ebensowenig notwendig wie eine Justierung der Sender und Empfänger.

Wie bereits beim dargestellten St.d.T. tritt die Wiederbereitschaftsschalteinrichtung nur nach Betätigung der Not-Austaste in Funktion. Die Überprüfung des Lichtvorhanges erfolgt bei jedem Not-Aus, wobei eine Freigabe der Steuerung in vorgegebener Zeit, beispielsweise nach 20 Sekunden erfolgen kann.

Je Auswertelektronik können in etwa 100 Sender und Empfänger vorgesehen werden, so daß man in der Regel mit lediglich einer Auswertelektronik je Rolltreppe bzw. Rollsteig auskommen kann. Das Gehäuse für die Auswertelektronik ist vorzugsweise modular aufgebaut.

Die Auswerlelektronik beinhaltet eine automatische Erkennung der Anzahl der installierten Lichtschranken, so daß keine Einstellung auf der Auswertelektronik erforderlich ist. Die Austauschbarkeit der Auswerlelektronik bei eventuellem Ausfall kann somit ohne Einstellarbeiten durchgeführt werden.

Vorzugsweise wird ein redundant aufgebauten Überwachungskreis vorgesehen, der in der Regel zwei konventionell getrennt aufgebeute Überwachungskreise beinhalten kann. Aus der Lichtschrankenkette werden zwei getrennte Signale mittels eines Microcontrollers ausgewertet. Zum einen kann ein Impulskreis als Fehlerortung zur Bestimmung der defekten Sender bzw. Empfänger vorgesehen werden, und zum anderen kann ein Spannungssignal zur Freigabe der redundanten Überwachungskreise vorgesehen werden, wobei auch Leitungsbruch erkannt werden kann.

Zusatzkomponenten zur Fehleranalyse sind somit nicht erforderlich. Die Zustandsanzeige kann beispielsweise durch farbige LED an der Auswertelektronik angezeigt werden, wobei Fehlermeldungen nur im Störfall angezeigt werden.

Vorzugsweise wird die Lichtschrankenkette nicht mit 220 V sondem mit einer Kleinspannung von beispielsweise 24 V betrieben. Durch Aneinandereihen mehrerer Auswerteeinrichtungen kann eine unbegrenzte Anzahl an überwachten Sendern und Empfängern vorgesehen werden, so daß auch überlange Rolltreppen bzw. Rollsteige in entsprechender Weise mit dieser Wiederbereitschaftsschaltung ausgerüstet werden können. Ein 2-Drahtsystem (CAN-Bus) ermöglicht die Datenübertragung zu einer Rolltreppendiagnoseeinrichtung.

Einem weiteren Gedanken der Erfindung gemäß sind Sender und Empfänger bezüglich ihrer geometrischen Gestalt baugleich ausgebildet. Einziger Unterschied könnten farbliche Dinge sein, an welchem man einen Sender von einem Empfänger unterscheiden kann. Im Bereich der Sockelleiste sind in vorgegebenen Abständen Ausnehmungen eingebracht, die zur Aufnahme des jeweiligen Senders/Empfängers dienen. Zum Schutz vor Wandalismus wird jeder Sender/Empfänger in ein zugehöriges Führungselement eingeschraubt, des sockelleistenseitig mit einer aus durchscheinendem Material bestehenden Abschlußkappe oder dgl. versehen ist. Durch diese Maßgabe wird bei gleichzeitiger staubgeschützter Anordnung der optischen Bauteile einerseits ein definierter Abstand zwischen dem Sender/Empfänger und der Abschlußplatte realisiert und andererseits ein glatter Abschluß mit dem Sockelblech herbeigeführt. Die Befestigung des Führungselementes gegenüber der Sockelleiste wird vorzugsweise durch eine abgewinkelte Halterung herbeigeführt, die außerhalb des abgewinkelten Bereiches mit einem zu Einstellzwecken dienendem Schlitz versehen ist. Der abgewinkelte Bereich weist die gleiche Höhe auf wie der nach innen hineinragende Teil des Führungselementes.

Zur Bildung einer Baueinheit wird die Halterung mit dem geschlitzten Bereich auf die freie Stirnfläche des Führungselements aufgesteckt und mittels einer oberhalb derse ben vorgesehenen Überwurfmutter gegenüber dem Führungselement positioniert. Diese Baueinheit kann nun mittels Schraubverbindung oder dgl. an der Sockelleiste befestigt werden, wobei evtl. Korrekturen durch Lösen der Überwurfmutter und Verschieben der Halterung gegenüber dem Führungselement realisiert werden können.

Einem weiteren Gedanken der Erfindung gemäß wird die Lichtschrankenkette mit Infrarotlicht betrieben.

Die Erfindung ist anhand eines Ausführungsbeispieles in der Zeichnung dargestellt und wird wie folgt beschrieben. Es zeigen:
- Figur 1 -: Prinzipskizze der erfindungsgemäßen Wiederbereitschaftsschalteinrichtung
- Figur 2 -: Teildarstellung der Wiederbereitschaftsschalteinrichtung in Form eines
Senders mit angedeuteter Befestigung an der Sockelleiste beispielsweise einer Rolltreppe
- Figur 3 -: Teildarstellung der Wiederbereitschaftsschalteinrichtung in Form eines
Empfängers mit alternativer Befestigungseinrichtung an der Sokkelleiste beispielsweise eines Rollsteiges
- Figur 4 -: Darstellung der Halterung gemäß Figur 3 in der Draufsicht

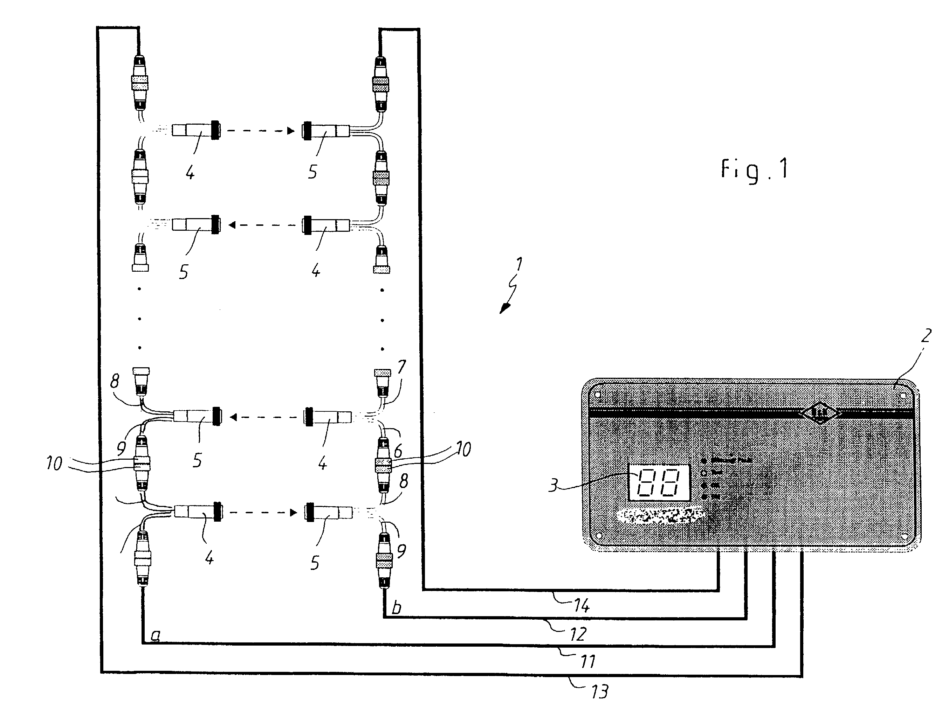

Figur 1 zeigt die erfindungsgemäße Wiederbereitschaftsschaltelnrichtung 1, die für eine nicht weiter dargestellte Rolltreppe zum Einsatz gelangen soll. Erkennbar ist eine Auswerteelektronik 2, die ein Display 3 beinhaltet, an welchem Fehlermeldungen ange zeigt werden können. Die Wiederbereitschaftsschalteinrichtung 1 beinhaltet eine aus einer Vielzahl von Sendern 4 und Empfängern 5 gebildete Lichtschrankenkette, die in Fahrtrichtung der nicht weiter dargestellten Rolltreppe alternierend angeordnet sind, dergestalt, daß jedem Sender 4 ein Empfänger 5 im wesentlichen gegenüberliegend vorgesehen ist. Jeder Sender 4 sowie jeder Empfänger 5 ist mit zwei Kabeln 6,7 bzw. 8,9 versehen, die über entsprechende Steckverbindungen 10 mit korrespondierenden Kabeln 7,6 bzw. 9,8 des jeweils anderen Bauteiles (Empfänger/Sender) in Reihe verbindbar sind, so daß sich letztendlich eine Lichtschrankenkette auf jeder Seite der Rolltreppe ergibt. Eine Verkabelung der linken (a) Sender/Empfänger mit denen der rechten Seite (b) ist somit nicht notwendig. Die Steckverbinder 10 sind vorzugsweise codiert ausgebildet, so daß lediglich zwei Bautypen für Sender 4 und Empfänger 5 zur Erzeugung der jeweiligen Lichtschrankenkette vonnöten sind. Durch entsprechende Kabel 11,12 sowie Rückführleitungen 13,14 sind die einzelnen Sender 4 sowie die Empfänger 5 untereinander verbunden. Durch die gewählte Ausführungsform sind kurze Kabelverbindungen zwischen Sendern 4 und Empfängern 5 auf jeder Solle a,b der Rolltreppe gegeben, wobei eine Justierung der Sender 4 und Empfänger 5 in der Regel nicht notwendig ist. Die Wiederbereitschaftsschalteinrichtung 1 wird nach jedem erfolgten Not-Aus aktiviert, wobei dann eine Überprüfung des durch die Sender 4 und Empfänger 5 gebildeten Lichtvorhanges durchgeführt wird. Jeder Auswerteelektronik 2 können eine Vielzahl von Sendern 4 und Empfängern 5 zugeordnet werden, so daß nahezu sämtliche Rolltreppenlängen von einer einzigen Auswerteelektronik 2 überwacht werden können. Sollte z.B. die Anzahl 100 überschritten werden, so kann durch Aneinanderreihen mehrerer Auswerteelektroniken 2 eine unbegrenzte Anzahl an überwachten Sendern 4 und Empfängern 5 vorgesehen werden.

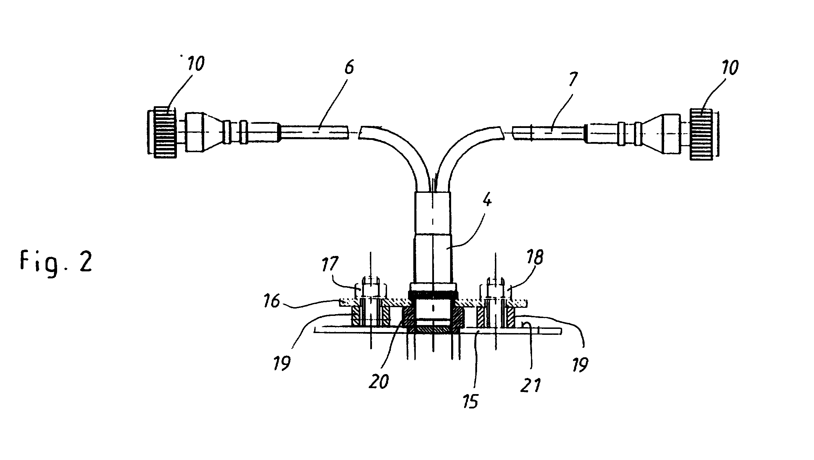

Figur 2 zeigt als Teildarstellung einen Sender 4, der an einer nur angedeuteten Sokkelleiste 15 der nicht weiter dargestellten Rolltreppe in geschützter Weise vorgesehen ist. Wie bereits in Figur 1 ausgeführt, ist der Sender 4 mit zwei Kabelenden 6,7 ausgerüstet, die in die codierten Steckverbinder 10 auslaufen. An diesen Steckverbindern 10 können nun entweder zur Auswerteelektronik 2 führende Kabel 11,12,13,14 (Figur 1) oder aber vor- bzw. nachgeschaltete Empfänger 5 angeschlossen werden. Der Sender 4 ist hinter der Sockelleiste 15 vorgesehen, so daß er gegen Beschädigungen geschützt ist. Die Befestigung erfolgt hierbei über eine Halterung 16, die mittels Schrauben 17,18 und Distanzelementen 19 sowie Führungselementen 20 an der Rückseite 21 der Sockelleiste 15 befestigt werden kann.

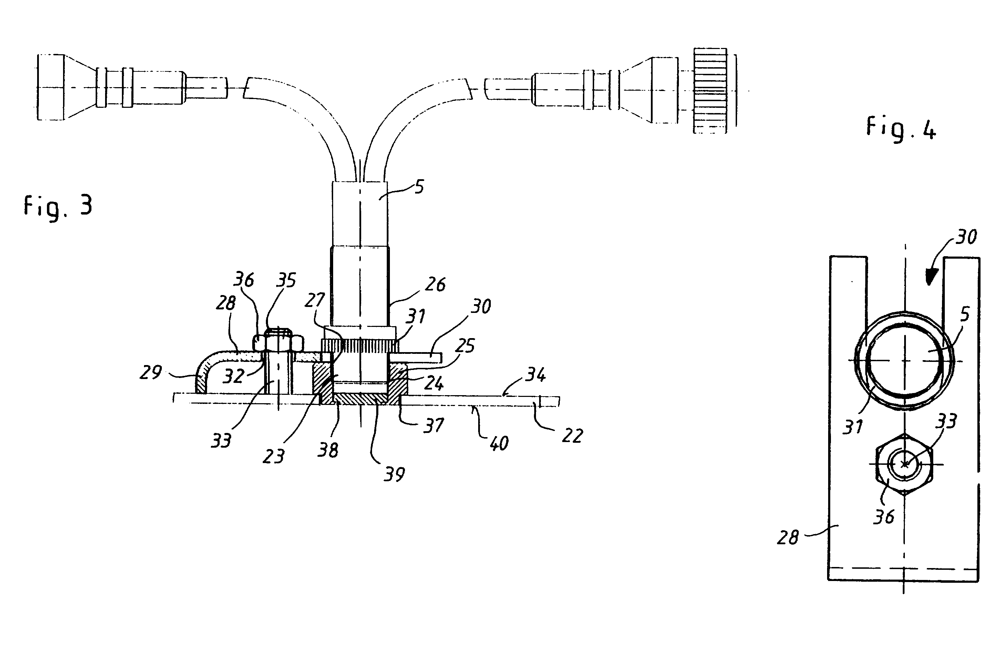

Figur 3 zeigt als Teildarstellung der Wiederbereitschaftsschalteinrichtung einen Empfänger 5 mit einer gegenüber der Figur 2 modifizierten Halterungsversion, die beispielsweise an der Sockelleiste 22 eines nicht weiter dargestellten Rollsteiges zum Einsatz gelangen kann. Das freie Ende 23 des Empfängers 5 ist in ein mit einem Absatz 24 versehenes Führungselement 25 dergestalt eingebracht, daß das Außengewinde 26 des Empfängers 5 in das Innengewinde 27 des Führungselementes 25 hineingeschraubt ist. Desweiteren ist eine Halterung 28 vorgesehen, die einenends einen abgewinkelten Bereich 29 und andernends einen geschlitzten Bereich 30 aufweist. Zur Bildung einer Baueinheit wird die Halterung 28 oberhalb des Führungselementes 25 auf den Empfänger 5 aufgeschoben und mittels einer ebenfalls mit einem Innengewinde versehenen Überwurfmutter 31 gegenüber dem Führungselement 25 fixiert. Die Halterung 28 weist zwischen dem Ende des Schlitzes 30 und dem abgewinkelten Bereich 29 eine Durchgangsbohrung 32 auf, die zum Durchtritt eines Befestigungselementes 33, in diesem Beispiel einen mit der Rückseite 34 der Sockelleiste 22 verbundenen Bolzen, auf. Die aus Empfänger 5, Führungselement 25, Halterung 28 sowie Überwurfmutter 31 bestehende Baueinheit wird nun im Bereich der Durchgangsbohrung 32 auf den mit einem Gewinde 35 versehenen Bolzen 33 aufgesteckt und mittels einer Mutter 36 gegenüber der Rückseite 34 der Sokkelleiste 22 arretiert. Der Schlitz 30 ist hierbei zum Toleranzausgleich der in der Sockelleiste 22 vorgesehenen Ausnehmung 37 in Bezug auf den Bolzen 33 vorgesehen. Der Ausgleich erfolgt, indem die Überwurfmutter 31 gelöst und die Halterung 28 in die entsprechende Richtung verschoben wird. Das Führungselement 25 ist im Bereich der Sockelleiste 22 mit einem weiteren Ansatz 38 versehen, auf welchem eine aus durchscheinendem Material bestehende Abschlußplatte 39 beispielsweise aufgeklebt ist. Das Führungselement 25 ist mit der Abschlußplatte 39 dergestalt verbunden, daß eine plane Ebene gebildet wird, die im montierten Zustand des Empfängers 5 ebenfalls bündig mit der Vorderseite 40 der Sockelleiste 22 abschließt.

Figur 4 zeigt als Draufsicht die Halterung 28 mit dem Schlitz 30 sowie der auf dem Bolzen 33 vorgesehenen Mutter 36. Femer erkennbar ist der Empfänger 5 sowie die Überwurfmutter 31.

## Patentansprüche

1. Wiederbereitschaftsschalteinrichtung für Personenförderanlagen, insbesondere für eine Rolltreppe oder einen Rollsteig, die bzw. der mit einer Vielzahl von aus nahe des Treppen- bzw. Palettenbandes im Sockelbereich angeordneten Sendern (4) und Empfängern (5) bestehenden Lichtschranken ausgerüstet ist, deren Signale mindestens einer Auswerteeleketronik (2) zugeführt werden, die die Personenförderanlage nach Betätigen der Nothalttaste selbsttätig wieder in den Zustand der Einsatzbereitschaft versetzt, dadurch gekennzeichnet, daß
- die einzelnen Sender (4) und Empfänger (5) zu einer Lichtschrankenkette zusammengefaßt sind,
- in vorgebbaren Abständen Sender (4) und Empfänger (5) einander in etwa gegenüberliegend angeordnet sind,
- auf jeder Seite (a,b) der Personenförderanlage Sender (4) und Empfänger (5) bzw. Empfänger (5) und Sender (4) alternierend vorgesehen sind, und
- die Verdrahtung der einzelnen Sender (4) und Empfänger (5) auf jeder Seite (a,b) der Personenförderanlage ohne Verbindung mit den auf der benachbarten Seite (b,a) vorgesehenen Empfängern (5) und Sendern (4) durch Steckverbindungen (10) hergestellt ist.

2. Einrichtung nach Anspruch 1, dadurch gekennzeichnet, daß jeder Sender (4) bzw. jeder Empfänger (5) mit zwei Kabelenden (6,7 bzw. 8,9) samt zugehörigen Steckverbindungen (10) zur Verbindung mit korrespondierenden Bauteilen (5,4,2) versehen ist.

3. Einrichtung nach den Ansprüchen 1 und 2, dadurch gekennzeichnet, daß die Steckverbindungen (10) codiert ausgebildet sind.

4. Einrichtung nach den Ansprüchen 1 bis 3, dadurch gekennzeichnet, daß Sender (4) und Empfänger (5) auf Basis von Infrarotlicht vorgesehen sind.

5. Einrichtung nach den Ansprüchen 1 bis 3, gekennzeichnet durch eine modular aufgebaute Auswerteelektronik (2).

6. Einrichtung nach Anspruch 5, gekennzeichnet durch einen redundant aufgebauten Überwachungskreis für die Sender (4) und Empfänger (5).

7. Einrichtung nach Anspruch 5 und 6, gekennzeichnet durch eine automatische Erkennung der Anzahl der installierten Sender (4) und Empfänger (5).

8. Einrichtung nach den Ansprüchen 1 bis 7, dadurch gekennzeichnet, daß Sender (4) und Empfänger (5) bezüglich ihrer geometrischen Gestalt baugleich ausgebildet sind.

9. Einrichtung nach den Ansprüchen 1 bis 8, dadurch gekennzeichnet, daß Sender (4) und Empfänger (5) sockelseitig innerhalb eines in eine Ausnehmung (37) der Sockellelste (15,22) einbringbaren Führungselement (20,25) gehalten sind, und daß die Sender (4) und die Empfänger (5) gegenüber der Sockelleiste (15,22) der Rolltreppe bzw. des Rollsteiges durch mindestens eine Halterung (16,28) fixierbar sind.

10. Einrichtung nach den Ansprüchen 1 bis 9, dadurch gekennzeichnet, daß das Führungselement (20,25) von einem aus durchscheinendem Material bestehenden Bauteil (39), insbesondere einer Scheibe, abgeschlossen ist.

11. Einrichtung nach den Ansprüchen 1 bis 10, dadurch gekennzeichnet, daß das Führungselement (20,25) samt Bauteil (39) in die Ausnehmung (37) der Sockelleiste (15,22) einsetzbar ist, dergestalt, daß ein bündiger Abschluß mit der Sockelleiste (15,22) herbeiführbar ist.

12. Einrichtung nach den Ansprüchen 1 bis 11, dadurch gekennzeichnet, daß die Sender (4) und die Empfänger (5) staubgeschützt innerhalb des zugehörigen Führungselementes (20,25) vorgesehen sind.

13. Einrichtung nach den Ansprüchen 1 bis 12, dadurch gekennzeichnet, daß das Führungselement (20,25) mit einem Innengewinde (24) und die Sender (4) sowie die Empfänger (5) mit einem korrespondierenden Außengewinde (26) versehen sind, wobei die Sender (4) und die Empfänger (5) unter Wahrung eines definierten Abstandes zum durchscheinenden Bauteil (39) in das zugehörige Führungselement (20,25) einschraubbar sind.

14. Einrichtung nach den Ansprüchen 1 bis 13, dadurch gekennzeichnet, daß die Halterung (16,28) ein Blech ist, das einerseits eine Durchgangsbohrung zur Aufnahme des jeweiligen Senders (4) bzw. Empfängers (5) und andererseits mindestens eine Durchgangsbohrung (32) für mindestens ein Befestigungselement, insbesondere eine Schraube (17,18), einen Bolzen oder dgl., aufweist.

15. Einrichtung nach den Ansprüchen 1 bis 13, dadurch gekennzeichnet, daß die Halterung (28) im Bereich ihres einen Endes abgewinkelt (29) und im Bereich ihres anderen Endes mit einem sich in Richtung des abgewinkelten Bereiches (29) erstreckenden Schlitz (30) versehen ist, wobei die Bohrung (32) zur Aufnahme eines Befestigungselementes, insbesondere eine Schraube, einen Bolzen (33) oder dgl., zwischen dem Ende des Schlitzes (30) und dem abgewinkelten Bereich (29) vorgesehen ist.

16. Einrichtung nach Anspruch 15, dadurch gekennzeichnet, daß zur Bildung einer Baueinheit der geschlitzte Bereich (30) der Halterung (28) oberhalb des Führungselementes (25) vorgesehen und mittels einer ein Innengewinde aufweisenden Überwurfmutter (31) gegenüber dem Führungselement (25) dergestalt fixierbar ist, daß die Überwurfmutter (31) auf dem am jeweiligen Sender (4) und Empfänger (5) vorgesehenen Außengewinde (26) in Richtung des Führungselementes (25) aufschraubbar ist.

17. Einrichtung nach den Ansprüchen 15 und 16, dadurch gekennzeichnet, daß diese Baueinheit dergestalt an der Sockelleiste (22) befestigt wird, daß das Führungselement (25) innerhalb der in der Sockelleiste (22) vorhandenen Ausnehmung (37) positioniert wird, wobei sich der abgewinkelte Bereich (29) der Halterung (28) auf der Rückseite (34) der Sockelleiste (22) abstützt, und daß das durch die zugehörige Durchgangsbohrung (32) hindurchragende Befestigungselement, insbesondere ein mit einem Gewinde (35) versehener Bolzen (33), mit einer Mutter (36) in Wirkverbindung bringbar ist.

## Claims

1. Switching arrangement for returning a people conveying device to a state of readiness, in particular for an escalator or travelator, which is equipped with a plurality of light barriers composed of emitters (4) and receivers (5) configured near the stair or pallet belt in the base area and the signals of which are fed to at least one evaluation electronics unit (2) which automatically retums the people conveying device into a state of readiness following an operation of the emergency stop, **characterised in that**
- the individual emitters (4) and receivers (5) are combined into a light barrier chain;
- emitters (4) and receivers (5) are configured approximately opposite each other at specified distances;
- on each side (a, b) of a people conveying device, emitters (4) and receivers (5) or receivers (5) and emitters (4) are altemately provided; and
- cabling of the individual emitters (4) and receivers (5) is accomplished by plug connections (10) on each side (a, b) of the people conveying device without connection to receivers (5) and emitters (4) provided on the neighbouring side (b, a).

2. Device according to Claim 1, **characterised in that** each emitter (4) or each receiver (5) is provided with two cable ends (6, 7 or 8, 9) including all associated plug connections (10) for connection to corresponding assembly components (5, 4, 2).

3. Device according to Claims 1 and 2, **characterised in that** the plug connections (10) are of encoded design.

4. Device according to Claims 1 to 3, **characterised in that** emitters (4) and receivers (5) are provided on the basis of infrared light.

5. Device according to Claims 1 to 3, **characterised by** an evaluation electronics unit (2) of modular design.

6. Device according to Claim 5, **characterised by** a redundantly structured monitoring circuit for the emitters (4) and the receivers (5).

7. Device according to Claims 5 and 6, **characterised by** automatic recognition of the number of installed emitters (4) and receivers (5).

8. Device according to Claims 1 to 7, **characterised in that** emitters (4) and receivers (5) are of identical design relative to their geometrical form.

9. Device according to Claims 1 to 8, **characterised in that** emitters (4) and receivers (5) are held at the side of the base within a guide element (20, 25) which is to be inserted into a recess (37) in the base ledge (15, 22), and the emitters (4) and the receivers (5) are fixed by at least one support (16, 28) relative to the base ledge (15, 22) of the escalator or travelator.

10. Device according to Claims 1 to 9, **characterised in that** the guide element (20, 25) is sealed off by an assembly component (39), in particular a disc, of translucent material.

11. Device according to Claims 1 to 10, **characterised in that** the guide element (20, 25) including assembly part (39) are insertible into the recess (37) of the base ledge (15, 22) so that a flush seal with the base ledge (15, 22) is established.

12. Device according to Claims 1 to 11, **characterised in that** the emitters (4) and the receivers (5) are protected from dust inside the associated guide element (20, 25).

13. Device according to Claims 1 to 12, **characterised in that** the guide element (20, 25) is provided with an intemal thread (24), and the emitters (4) as well as the receivers (5) are provided with a corresponding external thread (26), and the emitters (4) and the receivers (5) are screwed into the associated guide element (20, 25) whilst maintaining a defined distance from the translucent assembly component (39).

14. Device according to Claims 1 to 13, **characterised in that** the support (16, 28) is a metal plate comprising on the one side a throughbore to receive a respective emitter (4) or receiver (5) and on the other side at least one throughbore (32) for at least one fixing element, in particular a screw (17, 18), a bolt or the like.

15. Device according to one of Claims 1 to 13, **characterised in that** the support (28) is angled (29) in the area of one of its ends and in the area of its other end provided with a slot (30) which extends in the direction of the angled area (29), and the bore (32) for receiving a mounting element, in particular a screw, a bolt (33) or the like, is provided between the end of the slot (3) and the angled area (29).

16. Device according to Claim 15, **characterised in that,** for the purpose of establishing an assembly unit, the slotted area (30) of the support (28) is provided above the guide element (25) and fixed relative to the guide element (25) by means of a cap nut (31) having an intemal thread so that the cap nut (31) can be screwed in the direction of the guide element (25) onto the extemal thread (26) provided on the respective emitter (4) and receiver(5).

17. Device according to Claims 15 and 16, **characterised in that** this assembly unit is fixed to base ledge (22) in such a manner that the guide element (25) is positioned within the recess (37) present within the base ledge (22), and the angled area (29) of the support (28) supports itself against the rear side (34) of the base ledge (22), and the fixing element which protrudes through the associated throughbore (32), in particular a bolt (33) provided with a thread (35), is positively connected to a nut (36).

## Revendications

1. Dispositif de commutation de remise en service pour des installations de transport de personnes, notamment pour un escalier roulant ou un trottoir roulant, qui est équipé d'une multiplicité d'émetteurs (4) et de récepteurs (5), disposés à proximité de la bande de marches ou de palettes dans la zone de la plinthe et dont les signaux sont envoyés au moins à une unité électronique d'exploitation (2), qui remet à nouveau automatiquement dans son état prêt à être utilisée l'installation de transport de personnes après actionnement de la touche d'arrêt d'urgence, caractérisé en ce que
- les différents émetteurs (4) et les différents récepteurs (5) sont assemblés pour former une chaîne de relais photoélectriques,
- des émetteurs (4) et des récepteurs (5) sont disposés approximativement en vis-à-vis l'un de l'autre à des intervalles pouvant être prédéterminés,
- des émetteurs (4) et des récepteurs (5) ou des récepteurs (5) et des émetteurs (4) sont disposés en alternance de chaque côté (a,b) de l'installation de transport de personnes, et
- le câblage des différents émetteurs (4) et des différents récepteurs (5) est exécuté de chaque côté (a,b) de l'installation de transport de personnes, sans liaison avec les récepteurs (5) et les émetteurs (4), prévus sur le côté voisin (b,a), au moyen de connecteurs (10).

2. Dispositif selon la revendication 1, caractérisé en ce que chaque émetteur (4) ou chaque récepteur (5) est équipé de deux extrémités de câbles (6,7 et 8,9) ainsi que de connecteurs associés (10) pour établir la liaison avec des composants correspondants (5,4,2).

3. Dispositif selon l'une des revendications 1 et 2, caractérisé en ce que les connecteurs (10) sont réalisés en étant codés.

4. Dispositif selon l'une des revendications 1 à 3, caractérisé en ce que des émetteurs (4) et des récepteurs (5) sont prévus pour fonctionner sur la base d'une lumière infrarouge.

5. Dispositif selon l'une des revendications 1 à 3, caractérisé par un système électronique d'exploitation (2) agencé sous forme modulaire.

6. Dispositif selon la revendication 5, caractérisé par un circuit de contrôle agencé de façon redondante pour les émetteurs (4) et les récepteurs (5).

7. Dispositif selon les revendications 5 et 6, caractérisé par une identification automatique du nombre des émetteurs (4) et des récepteurs (5) installés.

8. Dispositif selon les revendications 1 à 7, caractérisé en ce que des émetteurs (4) et des récepteurs (5) sont agencés de manière à présenter la même configuration géométrique.

9. Dispositif selon l'une des revendications 1 à 8, caractérisé en ce que des émetteurs (4) et des récepteurs (5) sont contenus, du côté de la plinthe, à l'intérieur d'un élément de guidage (20,25), qui peut être inséré dans un évidement (37) de la barrette (15,22) de la plinthe, et que les émetteurs (4) et les récepteurs (5) peuvent être fixés par rapport à la barrette (15,22) de la plinthe de l'escalier roulant ou du trottoir roulant, par au moins un organe de retenue (16,28).

10. Dispositif selon les revendications 1 à 9, caractérisé en ce que l'élément de guidage (20,25) est fermé par un composant (39), qui est constitué par un matériau transparent, notamment un disque.

11. Dispositif selon les revendications 1 à 10, caractérisé en ce que l'élément de guidage (20,25) peut être inséré, conjointement avec le composant (39), dans l'évidement (37) de la barrette (15,22) de la plinthe de telle sorte qu'on obtient une terminaison de niveau avec la barrette (15,22) de la plinthe.

12. Dispositif selon l'une des revendications 1 à 11, caractérisé en ce que les émetteurs (4) et les récepteurs (5) sont prévus d'une manière protégée contre la poussière, à l'intérieur de l'élément associé de guidage (20,25).

13. Dispositif selon l'une des revendications 1 à 12, caractérisé en ce que l'élément de guidage (20,25) comporte un taraudage (24) et les émetteurs (4) ainsi que les récepteurs (5) sont pourvus d'un filetage extérieur correspondant (26), les émetteurs (4) et les récepteurs (5) pouvant être vissés dans l'élément de guidage associé (20,25), tout en conservant une distance définie par rapport au composant transparent (39).

14. Dispositif selon les revendications 1 à 13, caractérisé en ce que l'organe de retenue (16,28) est une tôle, qui comporte d'une part un perçage traversant servant à loger l'émetteur respectif (4) ou le récepteur respectif (5) et d'autre part au moins un perçage traversant (32) pour au moins un élément de fixation notamment une vis (17,18), un boulon ou analogue.

15. Dispositif selon les revendications 1 à 13, caractérisé en ce que l'organe de retenue (28) est coudé (29) au niveau de l'une de ses extrémités et comporte une fente (30) qui s'étend en direction de la partie coudée (29), le perçage (32) étant prévu de manière à loger un élément de fixation, notamment une vis, un boulon (33) ou analogue, entre l'extrémité de la fente (30) et la partie coudée (29).

16. Dispositif selon la revendication 15, caractérisé en ce que pour la formation d'une unité de construction, la partie fendue (30) de l'organe de retenue (28) est prévue au-dessus de l'élément de guidage (25) et peut être fixée à l'aide d'un écrou-raccord (31) pourvu d'un taraudage, par rapport à l'élément de guidage (25) de telle sorte que l'écrou-raccord (31) peut être vissé sur le filetage extérieur (26), prévu sur l'émetteur respectif (4) et sur le récepteur respectif (5), en direction de l'élément de guidage (25).

17. Dispositif selon les revendications 15 et 16, caractérisé en ce que cette unité de construction est fixée sur la barrette (22) de la plinthe, que l'élément de guidage (25) est positionné à l'intérieur de l'évidement (37) présent dans la barrette (22) de la plinthe, la partie coudée (29) de l'organe de retenue (28) prenant appui sur la face arrière (34) de la barrette (22) de la plinthe et que l'élément de fixation, qui traverse le perçage traversant associé (32), notamment un boulon (33) pourvu d'un filetage (35), peut être amené à coopérer avec un écrou (36).
